Europäisches Patentamt

European Patent Office

Office européen des brevets

(11) Veröffentlichungsnummer: **0 318 683 B1**

(12) **EUROPÄISCHE PATENTSCHRIFT**

(45) Veröffentlichungstag der Patentschrift: **18.12.91**

(51) Int. Cl.⁵: **B60G 9/00**

(21) Anmeldenummer: **88117175.5**

(22) Anmeldetag: **15.10.88**

(54) **Achsführung für gelenkte Starrachse.**

(30) Priorität: **02.12.87 DE 3740784**

(43) Veröffentlichungstag der Anmeldung:
**07.06.89 Patentblatt 89/23**

(45) Bekanntmachung des Hinweises auf die
Patenterteilung:
**18.12.91 Patentblatt 91/51**

(84) Benannte Vertragsstaaten:
**AT BE CH DE FR GB IT LI NL SE**

(56) Entgegenhaltungen:
**DE-A- 1 430 262       DE-A- 1 530 575**
**DE-A- 1 580 327       DE-A- 2 339 264**
**FR-A- 2 540 795       GB-A- 933 537**
**GB-A- 2 117 085       LU-A- 40 660**
**US-A- 4 248 455**

(73) Patentinhaber: **MAN Nutzfahrzeuge Aktiengesellschaft**
**Dachauer Strasse 667 Postfach 50 06 20**
**W-8000 München 50(DE)**

(72) Erfinder: **Fuchs, Dietrich, Dr. Ing.**
**Schützenstrasse 19**
**W-8047 Karlsfeld(DE).**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Achsführung für ein Kraftfahrzeug mit einer wenig vertikalen Bauraum beanspruchenden Anlenkung für einen lenkbare, gegebenenfalls angetrieben Räder tragenden Starrachskörper, mit Merkmalen entsprechend dem Oberbegriff des Anspruches 1.

Die Erfindung geht aus von einer Achsführung gemäß der FR-A-25 40 795. Diese besteht aus zwei einerseits am Fahrzeugrahmen, andererseits am Starrachskörper angelenkten Hochblatt-Längslenkern sowie einem Panhardstab als Querstabilisator vor der Starrachse. Außerdem ist zur Momentenabstützung eine Achsschwinge vorgesehen, die vorn mittig am Achskörper diesen mit einem Maul übergreifend, hinten an einer Quertraverse des Fahrzeugrahmens angelenkt ist und aus zwei teleskopartig ineinander verschiebbaren Teilen zusammengesetzt ist. Herstellung und Montage dieser Achsschwinge sind verhältnismäßig aufwendig.

Aus der DE-A-23 16 004 ist ferner eine Lenkerführung für die Starrachse eines Fahrzeugs bekannt, bei der zwei führende Längslenker und ein Diagonallenker vorgesehen sind, wobei einer der beiden Längslenker und gegebenenfalls auch der Diagonallenker fest am Starrachskörper angeordnet ist und somit neben seiner Führungsfunktion auch die Funktion der Momentenabstützung übernehmen muß. Obschon diese Lenkeranordnung in Vertikalrichtung wenig Platz beansprucht, ist sie doch für Lenkachsen mit gewissen Nachteilen behaftet, weil bei einem einseitigen Einfedern des Fahrzeuges, insbesondere bei Kurvenfahrten - für Rechts- und Linkskurven unterschiedlich - der Starrachskörper mit dem das Moment abstützenden Längslenker mit verdreht wird, was zu einer das Fahrverhalten verschlechternden Nachlaufveränderung führt. Gezogen wirken Bremsmomente an Vorderachsen zusätzlich einfedernd, und geschoben ist die Lenkschubstangenführung auch zu aufwendig. Insofern kann diese bekannte Achsführung nicht voll befriedigen.

Bei einer anderen bekannten, an gebauten Nutzfahrzeugen gegebenen Vorderachsführung sind zwei torsions- und querweiche, hochkantgestellte Federblätter als Längslenker vorgesehen, die einenendes am Starrachskörper, andernendes am Fahrzeugrahmen angelenkt sind. Diese Achsführung hat den Nachteil, daß sie - gezogen - über das Bremsmoment zur Achslastverteilung noch zusätzlich einfedernd wirkt. Ein weiterer Nachteil ist der bei Einfederung auftretende Abbau des die Lenkung stabilisierenden Nachlaufes der Achse bis hin zu einem Vorlauf. Nachteilig ist ferner bei einseitiger Einfederung des Fahrzeugs, z.B. während Kurvenfahrten, eine sich dabei einstellende festigkeitskritische Achskörperverdrehung sowie auf der seitenkraftintensiven kurvenäußeren Achsseite ein Abbau des die Lenkung stabilisierenden Nachlaufs des betreffenden Rades bis hin zu einem Vorlauf. Die rahmenseitige Längsblatt-Anlenkung muß außerdem mit Rücksicht auf deren Drillmomente üblicherweise metallisch ausgeführt werden, was aus Wartungs- und Geräuschübertragungsgründen ebenfalls von Nachteil ist. Eine Anlenkungsumkehr von gezogener zu geschobener Achse würde zwar bei dieser Art von Achsführung die kinematischen Nachteile vermeiden, jedoch würde sich dann die Lenkschubstangen-Geometrie über Gebühr verkomplizieren.

Darüber hinaus ist für eine Vorderachse eine starr mit dieser verbundene, am Rahmen angelenkte, gezogene Schwinge, die zusätzlich eine Achslängsführungsfunktion übernimmt, bekannt. Diese gezogene Schwinge bzw. Deichsel vermeidet zwar den Nachteil des Nachlauf-Abbaues der Achse auf der kurvenäußeren Seite bei einseitiger Fahrzeugeinfederung, der Nachteil des Nachlauf-Abbaues bei Paralleleinfederung haftet ihr jedoch ebenso an. Ferner führen Bremsmomente hierbei auch zu zusätzlichen Einfederungen. Wäre diese Schwinge bzw. Deichsel geschoben angeordnet, so ergäben sich dann wiederum Probleme hinsichtlich der Lenkschubstangen-Geometrie.

Es ist daher Aufgabe der Erfindung, für eine starre Vorderachse eines Kraftfahrzeug eine Anlenkung zu schaffen, die möglichst wenig vertikalen Platzbedarf beansprucht und in allen Fahr- sowie Einfederungssituationen eine kritische Veränderung des Achsnachlaufes vermeidet und bei Abbremsung des Fahrzeugs nicht zusätzlich einfedernd wirkt.

Diese Aufgabe ist erfindungsgemäß durch ein Kraftfahrzeug mit den im Kennzeichen des Anspruchs 1 angegebenen Merkmalen gelöst.

Vorteilhafte Ausgestaltungen dieser Lösung sind in den Unteransprüchen angegeben.

Durch die erfindungsgemäße Achs-Anlenkung bleibt bei Kurvenfahrt des Fahrzeugs der Achs-Nachlauf seitenneigungsunabhängig erhalten, und bei dynamischer Einfederung vergrößert sich der die Lenkung des Fahrzeugs stabilisierende Nachlauf. Bremsmomente, die von der fliegend aufgehängten Schwinge abgefangen werden, wirken hierbei einer dynamischen Einfederung entgegen. Die Seitenkraftaufnahme kann über einen an sich bekannten im Längslenker-Rechteck angeordneten Diagonallenker, Dreieckslenker, Panhardstab oder dergleichen Organ erfolgen.

Die erfindungsgemäße Ausgestaltung der Achs-Anlenkung erlaubt außerdem eine günstige Anordnung und Geometrie der Lenkschubstangen und läßt bei ihrer Anwendung, insbesondere in Niederfluromnibussen, ein sehr vorteilhaftes Fahrverhalten erwarten.

Nachstehend ist die Erfindung anhand mehrerer in der Zeichnung dargestellter Ausführungsbeispiele näher erläutert. In der Zeichnung zeigen jeweils in weitestgehend schematisierter Darstellung:

Fig. 1          in Draufsicht eine Ausführungsform der Anlenkung einer lenkbare Räder tragenden Starrachse,

Fig. 2          eine Seitenansicht der Darstellung gemäß Fig. 1,

Fig. 3 und 4          in Draufsicht je eine weitere Ausführungsform der Anlenkung einer lenkbare Räder tragenden Starrachse, und

Fig. 5 bis 7          in Seitenansicht und vergrößert je eine Ausführungsform der Aufhängung der fliegenden Achsschwinge als Teil der in den Figuren 1 bis 4 dargestellten Achs-Anlenkungen.

In den Figuren sind der Übersichtlichkeit wegen gleiche Teile mit gleichen Bezugszeichen versehen.

Die dargestellten Achs-Anlenkungen sind Teil eines Kraftfahrzeugs, insbesondere eines Niederfluromnibusses, das bzw. der des weiteren nicht dargestellt ist. Niederfluromnibusse haben eine Fahrgastzelle mit sehr tief liegendem, d.h. knapp über der Fahrbahn verlaufenden Boden, so daß für die Anordnung der Achsaufhängung und der Lenkschubstangen nur ein sehr begrenzter Raum zur Verfügung steht. Die erfindungsgemäße Lösung nutzt die gegebenen beengten Raumverhältnisse derart, daß sowohl die Organe der Achs-Anlenkung als auch die Lenkschubstangen in optimaler Weise untergebracht sind.

Ein Kriterium der erfindungsgemäßen Achs-Anlenkung ist, daß die achsführenden Organe - in Fahrtrichtung vorwärts gemäß Pfeil 1 gesehen- gezogen vor dem Starrachskörper 2 angeordnet und von der Funktion der Momentenabstützung befreit bzw. getrennt sind.

Am Starrachskörper 2 sind beiderseits Räder 3 bzw. 4 tragende Radträger 5 bzw. 6 schwenkbar gelagert. Mit 7 ist als Teil einer des weiteren nicht dargestellten Fahrzeuglenkung eine Lenkschubstange bezeichnet.

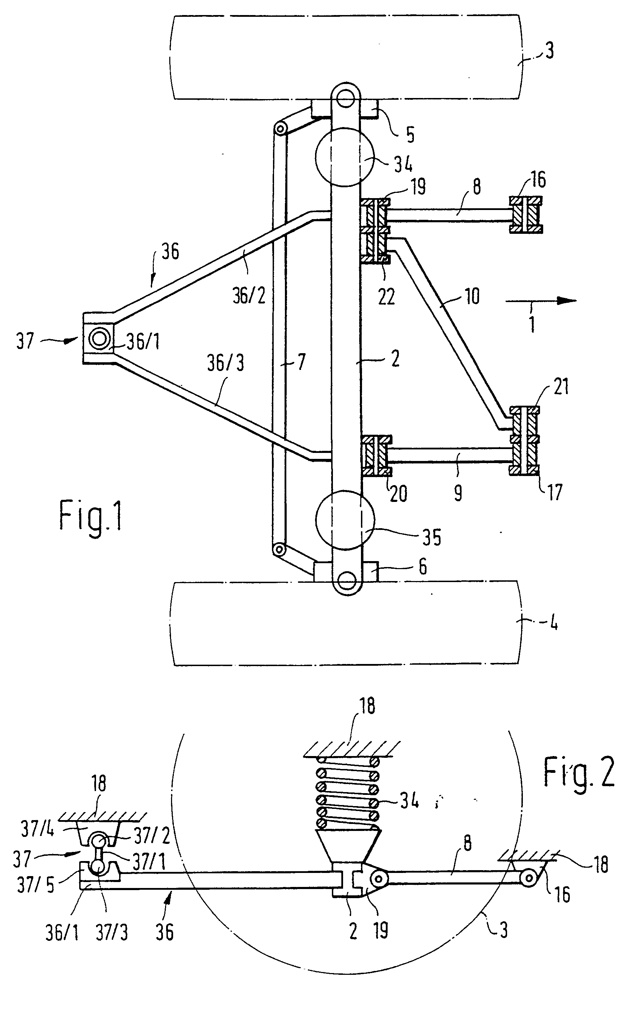

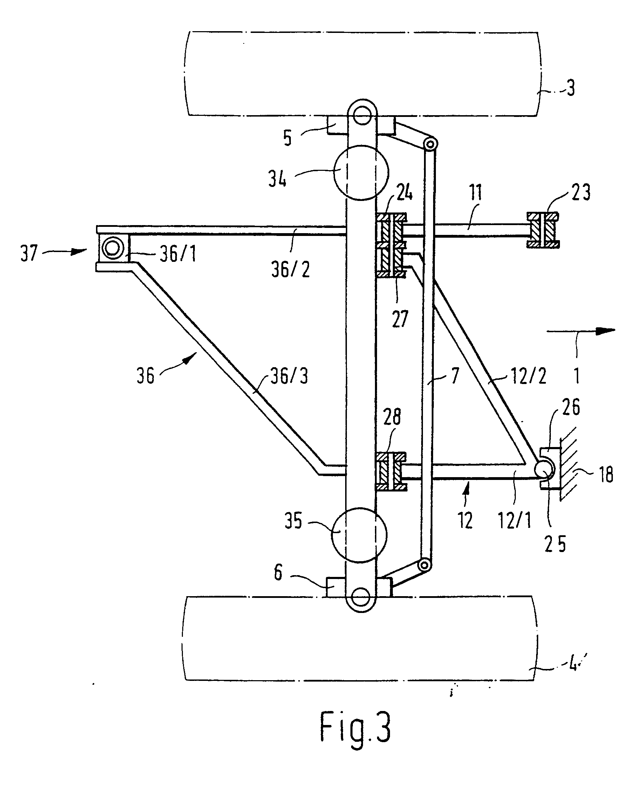

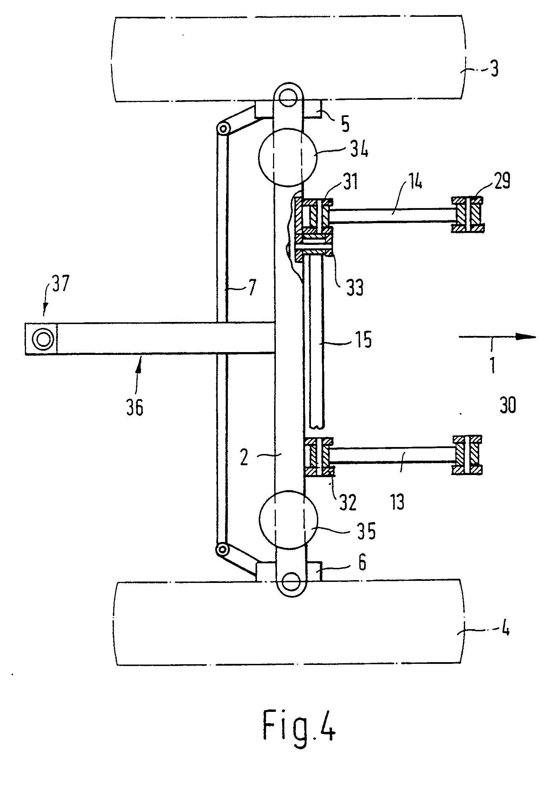

Als achsführende Organe können - wie in Fig. 1 und 2 gezeigt - zwei Längslenker 8, 9 sowie ein Diagonallenker 10, oder - wie in Fig. 3 gezeigt - ein Längslenker 11 und ein Dreieckslenker 12 mit Streben 12/1, 12/2, oder - wie in Fig. 4 gezeigt - zwei Längslenker 13, 14 und ein Panhardstab 15, oder jede andere geeignete niedrigbauende, d.h. wenig vertikalen Bauraum beanspruchende Lenkerausführung vorgesehen sein. Die Längslenker 8, 9 gemäß Fig. 1 und 2 sind jeweils über einen Lagerbock 16 bzw. 17 einenendes am generell in den Figuren mit 18 bezeichneten Fahrzeugrahmen sowie andernendes über jeweils einen Lagerbock 19 bzw. 20 am Starrachskörper 2 angelenkt. Der zugehörige, für die Seitenführung sorgende Diagonallenker 10 ist einerseits fahrzeugrahmenseitig in einem neben dem Lagerbock 17 angeordneten Lagerbock 21 und starrachskörperseitig in einem neben dem Lagerbock 19 angeordneten Lagerbock 22 angelenkt. Im Fall von Fig. 3 ist der Längslenker 11 fahrzeugrahmenseitig in einem Lagerbock 23 und starrachskörperseitig in einem Lagerbock 24 angelenkt. Der zugehörige Dreieckslenker 12 ist mit einer endseitigen Kugel fahrzeugrahmenseitig in einer Kugelkalotte 26 gelagert, während die beiden Streben 12/1, 12/2 andernendes starrachskörperseitig jeweils in einem Lagerbock 27 bzw. 28 angelenkt sind. Im Fall von Fig. 4 ist jeder der beiden Längslenker 13, 14 fahrzeugrahmenseitig jeweils in einem Lagerbock 29 bzw. 30 und starrachskörperseitig in einem Lagerbock 31 bzw. 32 angelenkt. Der dort zugehörige Panhardstab 15 ist starrachskörperseitig an einer Lagerstelle 33 und fahrzeugrahmenseitig an einer nicht gezeigten Lagerstelle angelenkt.

Der Fahrzeugrahmen 18 ist generell über zwei Feder-Dämpfer-Systeme 34 bzw. 35, bei denen es sich auch um die Luftfederbälge einer pneumatischen Federung handeln kann, federnd am Starrachskörper 2 abgestützt (siehe Fig. 2).

Die von den längs- und seitenführenden Organen der Achs-Anlenkung befreite Momentenabstützung wird von einer fliegend aufgehängten Achsschwinge 36 übernommen. Diese ist mit ihrem vorderen Ende fest am Starrachskörper 2 angeordnet, z.B. angeschweißt oder angeschraubt, und andernendes am Fahrzeugrahmen 18 fliegend aufgehängt, über ein Distanzorgan 37, das in vertikaler Richtung weitestgehend steif ist, ansonsten jedoch begrenzt Längs-, Quer- und Kippbewegungen der Achsschwinge 36 zuläßt.

Die Achsschwinge 36 erstreckt sich vorzugsweise in jener horizontal verlaufenden Fahrzeugebene, in der auch die achsführenden Längs-, Dreiecks- und/oder Diagonallenker 8, 9, 10 bzw. 11, 12 bzw. 13, 14 sowie der Starrachskörper 2 angeordnet sind (siehe Fig. 2).

Die Achsschwinge 36 kann symmetrisch (siehe Fig. 1 und 4) oder asymmetrisch (siehe Fig. 3) in Bezug auf die vertikale Fahrzeugmittellängsebene angeordnet und auch auf verschiedene Weise realisiert sein. Im Fall von Fig. 1 und 3 ist die Achsschwinge 36 durch zwei an ihren freien Enden an einem Halteorgan oder Widerlager 36/1 für das Distanzorgan 37 zusammengefaßte Streben 36/2, 36/3 gebildet. Die Achsschwinge 36 kann aber auch, wie in Fig. 4 gezeigt, durch einen am Starrachskörper 2 frei auskragenden Träger gebildet sein. Die dargestellten Ausführungsformen für die Achsschwinge 36 sollen lediglich deren Ausgestaltungs- und Anordnungsmöglichkeiten aufzeigen, jedoch diese in keiner Weise einschränken. Gleiches gilt auch für die Aufhängung der Achsschwinge 36 mittels des Distanzorganes 37, für die einige Ausführungsbeispiele in den Figuren 2 und 5 bis 8 gezeigt sind. Dabei kann das Distanzorgan 37 - wie in Fig. 2 gezeigt - durch eine starre, insbesondere metallische Stange 37/1 · gebildet sein, die an jedem Ende einen Kugelkopf 37/2, 37/3 aufweist, wobei der obere (37/2) in einer am Fahrzeugrahmen 18 befestigten Kugelkalotte 37/4 und der untere (37/3) in einer am Ende der Achsschwinge 36 am Widerlager 36/1 angeordneten Kugelkalotte 37/5 gefaßt ist.

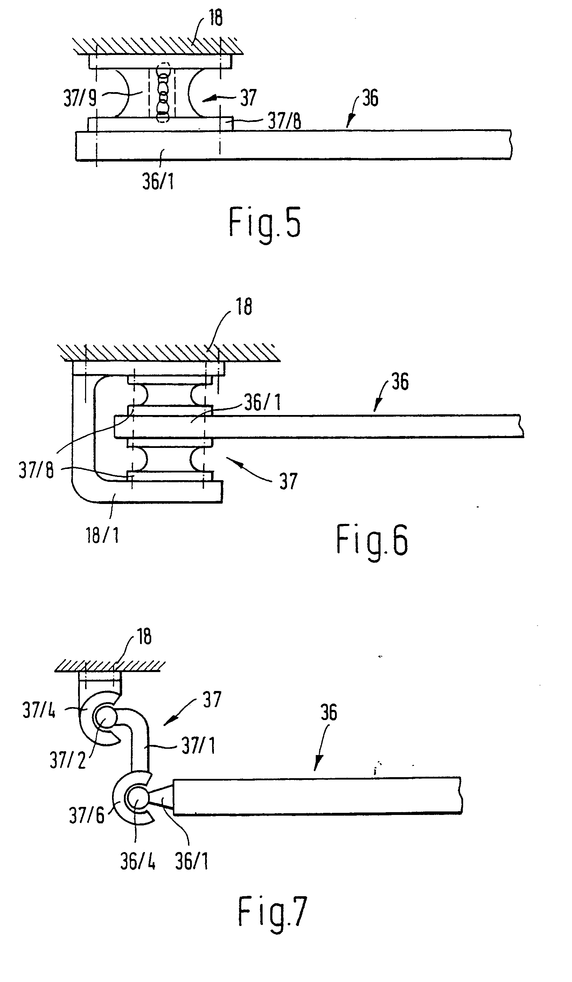

Im Fall von Fig. 7 ist das Distanzorgan 37 ebenfalls durch eine starre, insbesondere metallische Stange 37/1 gebildet, die an ihrem oberen abgekröpften Ende einen Kugelkopf 37/2 und an ihrem unteren Ende eine seitlich zur Achsschwinge 36 hin offene Kugelkalotte 37/6 trägt. In letzterer ist ein endseitig an der Achsschwinge 36 angeordneter Kugelkopf 36/4 gefaßt. Der Kugelkopf 37/2 ist in einer am Fahrzeugrahmen 18 befestigten Kugelkalotte 37/4 gefaßt.

Im Fall gemäß Fig. 5 ist als Distanzorgan 37 ein Gummilager 37/8 mit umlaufender Radialnut 37/9 vorgesehen, das mit seiner einen Stirnfläche am Fahrzeugrahmen 18 bzw. einem fahrzeugrahmenfesten Organ anliegend und mit seiner gegenüberliegenden Stirnfläche am Widerlager 36/1 der Achsschwinge 36 anliegend befestigt ist sowie im Inneren einen mechanischen Zugbegrenzungsanschlag aufweist. Im Fall von Fig. 6 sind davon abweichend zur Vermeidung des inneren Zugbegrenzungsanschlages zwei ähnliche Gummilager 37/8 als Distanzorgan 37 vorgesehen, die sich beiderseits des Widerlagers 36/1 an der Achsschwinge 36 abstützen und in einem fahrzeugrahmenfesten, U-förmigen Organ 18/1 gefaßt sind.

Unabhängig von seiner jeweiligen Ausgestaltung ist das Distanzorgan 37 in der Lage, beim Bremsen des Fahrzeuges über den Starrachskörper 2 in die Achsschwinge 36 eingeleitete Momente abzustützen, ohne eine zusätzliche Einfederung zu bewirken, sondern im Gegenteil diese zu reduzieren und ohne den Nachlauf der gelenkten Räder nachteilig zu beeinflussen.

**Patentansprüche**

1. Achsführung für ein Kraftfahrzeug mit einer wenig vertikalen Bauraum beanspruchenden Anlenkung für einen lenkbare, gegebenenfalls angetriebene Räder (3, 4) tragenden Starrachskörper (2), mit achsführenden Organen (8, 9, 10; 11, 12; 13, 14, 15) wie Längs-, Dreiecks-, Diagonal- oder dergleichen Lenkern, die - in Fahrtrichtung vorwärts gesehen - vor dem Starrachskörper (2) einerseits an diesem, andererseits am Fahrzeugrahmen (18) angelenkt und von der Momentenabstützung befreit sind, und mit einer Achsschwinge (36) zur Momentenabstützung, die - in Fahrtrichtung vorwärts gesehen - hinter dem Starrachskörper (2) einenendes an diesem, andernendes am Fahrzeugrahmen (18) über ein in vertikaler Richtung weitestgehend steif es Distanzorgan (37) angeschlossen ist,

dadurch gekennzeichnet,

daß die zur Momentenabstützung dienende Achsschwinge (36) einenendes fest am Starrachskörper (2) angeordnet und andernendes fliegend am Fahrzeugrahmen (18) aufgehängt ist, wobei das Distanzorgan (37), begrenzt Längs-, Quer- und Kippbewegungen der Achsschwinge (36) zuläßt.

2. Achsführung nach Anspruch 1, dadurch gekennzeichnet, daß die fliegend aufgehängte Achsschwinge (36) in jener im wesentlichen horizontalen Fahrzeugebene angeordnet ist, in der auch die achsführenden Längs-, Dreiecks-, Diagonal- oder dergleichen Lenker sowie der Starrachskörper (2) angeordnet sind.

3. Achsführung nach einem der vorhergehenden Ansprüche, dadurch gekennzeichnet, daß die fliegend aufgehängte Achsschwinge (36) symmetrisch in Bezug auf die vertikale Fahrzeugmittellängsebene angeordnet ist.

4. Achsführung nach einem der Ansprüche 1 und 2, dadurch gekennzeichnet, daß die fliegend aufgehängte Achsschwinge (36) asymmetrisch in Bezug auf die vertikale Fahrzeuglängsebene angeordnet ist.

5. Achsführung nach einem der vorhergehenden Ansprüche, dadurch gekennzeichnet, daß die fliegend aufgehängte Achsschwinge (36) mit ihrem einen Ende fest mit dem Starrachskörper (2) verbunden ist.

6. Achsführung nach den vorhergehenden Ansprüchen, dadurch gekennzeichnet, daß das Distanzorgan (37) zur fliegenden Aufhängung der Achsschwinge (36) durch eine starre Koppel (37/1) gebildet ist, die an jedem Ende ein Gelenk (37/2, 37/3) mit zumindest begrenzten Verdrehfreiheitsgraden um die Achsen aufweist, wobei das obere (37/2) am Fahrzeugrahmen (18) gelagert und das untere (37/3) am Ende der Achsschwinge (36) gelagert ist (Fig. 2).

7. Achsführung nach den Ansprüchen 1 bis 5, dadurch gekennzeichnet, daß als Distanzorgan (37) zur fliegenden Aufhängung der Achsschwinge (36) ein Puffer (37/8) aus begrenzt elastischem Material mit umlaufender Radialnut (37/9) vorgesehen ist, der mit seiner einen Stirnfläche am Fahrzeugrahmen (18) bzw. einem fahrzeugrahmenseitigen Aufnahmeorgan (18/1) anliegend und mit seiner gegenüberliegenden Stirnfläche an der Achsschwinge (36) anliegend befestigt ist sowie im Inneren einen mechanischen Zugbegrenzungsanschlag aufweist (Fig. 5, 6).

8. Achsführung nach den Ansprüchen 1 bis 5, dadurch gekennzeichnet, daß das Distanzorgan (37) zur fliegenden Aufhängung der Achsschwinge (36) durch eine starre Stange (37/1) gebildet ist, die an ihrem oberen abgekröpften Ende einen Kugelkopf (37/2) und an ihrem unteren Ende eine seitlich zur Achsschwinge (36) hin offene Kugelkalotte (37/6) aufweist, in der die Achsschwinge (36) mit einem endseitig angeordneten Kugelkopf (36/4) gefaßt ist, während der obere Kugelkopf (37/2) in einer am Fahrzeugrahmen (18) befestigten Kugelkalotte (37/4) gefaßt ist (Fig. 7).

## Claims

1. Axle guide for a motor vehicle having a linkage taking up a small amount of vertical construction space, for a steerable rigid axle shaft, possibly bearing driven wheels (3, 4), having axle-guiding members (8, 9, 10; 11, 12; 13, 14, 15) such as longitudinal, triangular, diagonal or similar steering elements which, forwards as seen in the direction of travel, are coupled in front of the rigid axle shaft (2) at one end thereto and at the other end to the vehicle frame (18), and which are free of moment support, and having an axle swinging arm (36) for moment support which, forwards as seen in the direction of travel, is connected behind the rigid axle shaft (2) at one end thereto and at the other end to the vehicle frame (18) by way of a spacer member (37), which is largely rigid in the vertical direction, characterized in that the axle swinging arm (36) serving for moment support is arranged with one end fixed to the rigid axle shaft (2) and with the other end suspended as a cantilever on the vehicle frame (18), the spacer member (37) allowing limited longitudinal, transverse and tilting movements of the axle swinging arm (36).

2. Axle guide according to Claim 1, characterized in that the axle swinging arm (36) suspended as a cantilever is arranged in the substantially horizontal vehicle plane in which the axle-guiding longitudinal, triangular, diagonal or similar steering elements and the rigid axle shaft (2) are also arranged.

3. Axle guide according to one of the preceding claims, characterized in that the axle swinging arm (36) suspended as a cantilever is arranged to be symmetrical with respect to the vertical central longitudinal plane of the vehicle.

4. Axle guide according to one of Claims 1 and 2, characterized in that the axle swinging arm (36) suspended as a cantilever is arranged to be asymmetrical with respect to the vertical longitudinal plane of the vehicle.

5. Axle guide according to one of the preceding claims, characterized in that the axle swinging arm (36) suspended as a cantilever is firmly connected at one end to the rigid axle shaft (2).

6. Axle guide according to the preceding claims, characterized in that the spacer member (37) for cantilever suspension of the axle swinging arm (36) is formed by a rigid coupler (37/1) which has at each end a joint (37/2, 37/3) with at least limited degrees of torsional freedom about the axes, the upper one (37/2) being mounted on the vehicle frame (18) and the lower one (37/3) being mounted on the end of the axle swinging arm (36) (Fig. 2).

7. Axle guide according to Claims 1 to 5, characterized in that there is provided as spacer member (37) for cantilever suspension of the axle swinging arm (36) a buffer (37/8) comprising material of limited elasticity with peripheral radial groove (37/9), this buffer being secured such that it bears by means of one end surface on the vehicle frame (18) or on a receiving member (18/1) on the vehicle frame side, and such that it bears by means of its opposite end surface on the axle swinging arm (36), and having on the interior a mechanical tension-limiting stop (Figs. 5, 6).

8. Axle guide according to Claims 1 to 5, characterized in that the spacer member (37) for cantilever suspension of the axle swinging arm (36) is formed by a rigid rod (37/1) which has at its upper end, which is bent off at a right angle, a spherical head (37/2) and has at its lower end a spherical cup (37/6), which is open laterally towards the axle swinging arm (36) and in which the axle swinging arm (36) is held by means of a spherical head (36/4) arranged on its end side, while the upper spherical head (37/2) is held in a spherical cup (37/4) secured to the vehicle frame (18) (Fig. 7).

## Revendications

1. Montage d'essieu pour un véhicule à moteur avec une articulation ne requérant que peu de place dans le sens vertical, pour un corps d'essieu rigide (2) portant des roues (3, 4) directrices, le cas échéant motrices, avec des organes de guidage de l'essieu (8, 9, 10 ; 11, 12 ; 13, 14, 15) tels que des bras directeur longitudinaux, triangulaires, en diagonal ou analogues, qui - ou dans le sens de la marche avant - sont articulés en avant du corps d'essieu rigide (2) d'une part sur celui-ci, d'autre part sur le châssis du véhicule (18) et sont libérés de l'appui des moments, avec une bielle d'essieu (36) pour l'appui des moments qui - vu dans le sens de la marche avant - est associée en arrière du corps d'essieu rigide (2) par l'une de ses extrémités à celui-ci et par l'autre extrémité au châssis (18) du véhicule par l'intermédiaire d'une pièce d'écartement (37) dans le sens vertical, montage caractérisé en ce que la bielle d'essieu (36) servant à l'appui des moments est à une de ses extrémités solidaire du corps d'essieu rigide (2) et à l'autre extrémité est suspendue flottante au châssis (18) du véhicule, la pièce d'écartement (37) fortement rigide dans le sens vertical permet de façon limitée des mouvements longitudinaux, transversaux et d'inclinaison de la bielle (36) d'essieu.

2. Montage d'essieu selon la revendication 1, caractérisé en ce que la bielle d'essieu (36) suspendue, flottante est disposée dans celui des plans sensiblement horizontaux du véhicule, dans lequel sont aussi disposés les bras directeur longitudinaux, triangulaires, en diagonal, ou analogues de guidage de l'essieu ainsi que le corps d'essieu rigide (2).

3. Montage d'essieu selon l'une des revendications précédentes, caractérisé en ce que la bielle d'essieu (36) suspendue flottante est disposée symétriquement par rapport au plan vertical longitudinal du milieu du véhicule.

4. Montage d'essieu selon l'une des revendications 1 ou 2, caractérisé en ce que la bielle d'essieu (36) suspendue flottante est disposée asymétriquement par rapport au plan longitudinal vertical du véhicule.

5. Montage d'essieu selon l'une des revendications précédentes, caractérisé en ce que la bielle d'essieu (36) suspendue flottante est solidaire par l'une de ses extrémités du corps d'essieu rigide (2).

6. Montage d'essieu selon l'une des revendications précédentes, caractérisé en ce que la pièce d'écartement (37) par rapport à la suspension flottante de la bielle d'essieu (36) est formée par un accouplement rigide (37/1), qui présente à chacune de ses extrémités une articulation (37/2, 37/3) avec des degrés de liberté en rotation au moins limités autour des essieux, l'articulation supérieure (37/2) étant montée sur le châssis (18) du véhicule et inférieure (37/3) sur l'extrémité de la bielle d'essieu (36) (voir figure 2).

7. Montage d'essieu selon les revendications 1 à 5, caractérisé en ce qu'on prévoit comme pièce d'écartement (37) par rapport à la suspension flottante de la bielle d'essieu (36) un amortisseur (37/8) en une matière relativement élastique avec une gorge radiale périphérique (37/9), amortisseur qui est fixé par celle de ses faces frontales et repose sur le châssis (18) du véhicule ou sur un organe de réception (18/1) solidaire du châssis du véhicule et par sa face frontale située à l'opposé est fixé et repose sur la bielle d'essieu (36) en même temps qu'il présente à l'intérieur une butée mécanique de limitation de traction (figures 5 et 6).

8. Montage d'essieu selon les revendications 1 à 5, caractérisé en ce que la pièce d'écartement (37) par rapport à la suspension flottante de la bielle d'essieu (36) est formée par une tige rigide (37/1) qui à son extrémité supérieure coudée présente une boule (37/2) et à son extrémité inférieure une calotte sphérique ouverte latéralement vers la bielle d'essieu (36), calotte dans laquelle est logée la bielle d'essieu (36) au moyen d'une boule (36/4) disposée à son extrémité, tandis que la boule supérieure (37/2) est logée dans une calotte sphérique fixée sur le châssis (18) du véhicule (figure 7).

Fig.1

Fig.2

Fig.3

8

Fig.4

18

37/9    37

37/8    36

36/1

Fig.5

18

36

36/1

37/8

37

18/1

Fig.6

18

37/4    37

37/2    37/1

37/6    36

36/4    36/1

Fig.7